# EUROPEAN PATENT APPLICATION

(11) **EP 4 624 667 A1**
(43) Date of publication of application: **01.10.2025**
(21) Application number: 24167378.9
(22) Date of filing: 28.03.2024
(51) Int. Cl.: E01F 15/06, A01G 13/02, E01F 7/04, B21F 27/00, D04B 21/16

(54) **TEXTILE SUPPORT AND/OR PROTECTION DEVICE**

(71) Applicant: Julius Koch GmbH, 23714 Kreuzfeld/Malente (DE)
(72) Inventor: Bonow, Laars, 23714 Kreuzfeld/Malente (DE)
(74) Representative: RGTH

(57) **Abstract**

To provide a support and/or protection structures for indoor and/or outdoor applications which can be installed in an easy and cost effective manner, a textile support and/or protection device (100) for supporting and/or protecting an object and/or an area and for indoor and/or outdoor application, in particular in agriculture, environmental engineering, sports, leisure, building industry, construction, dust protection, industry application, environmental protection, military, waste management application and/or road work, is proposed comprising an area-measured support and/or protection section (10), wherein at least one fastening element (12a, 12b, 12c, 13a, 13b, 13c), in particular a fastening loop, is arranged at an edge (11a, 11b) of the support and/or protection device (100) or offset from the edge (11a, 11b) towards a center of the support and/or protection section (10).

## Description

The invention relates to a textile support and/or protection device for supporting and/or protecting an object and/or an area, a method for producing such a textile support and/or protection device and method for converting such a textile support and/or protection device into a transport configuration.

In many outdoor applications, such as agriculture, environmental engineering, sports, construction and/or road work, textile support and/or protection structures are known in order to support an object, for example agricultural goods, such as crops, or to protect certain areas, for example ski slopes, roadways or working areas. Examples of textile support or protection structures are nets which are installed surrounding the object or area to supported or protected.

Since these nets are typically extending over large areas, such as agricultural plantations, and are therefore large in size, installing the nets is associated with a large amount of manual labor. Usually, separate fastening elements, such as hooks, are provided which have to be manually attached to both the net and a support structure for the net. This results high installations costs due to the amount of manual labor that is necessary. The costs are furthermore increased since separate fastening elements have to be provided.

It is an object of the invention to provide a support and/or protection structures for indoor and/or outdoor applications which can be installed in an easy and cost effective manner.

The object of the invention is solved by a textile support and/or protection device for supporting and/or protecting an object and/or an area and for indoor and/or outdoor application, in particular in agriculture, environmental engineering, sports, leisure, building industry, construction, dust protection, industry application, environmental protection, military, waste management and/or road work, comprising an area-measured support and/or protection section, wherein at least one fastening element, in particular a fastening loop, is arranged at an edge of the support and/or protection device or offset from the edge towards a center of the support and/or protection section.

The at least one fastening element is in particular configured for fastening the support and/or protection device to an external structure, for example a fastening rod. The fastening device can also be connected to other objects such as ropes or one or more further support and/or protection devices. The fastening element may also be fastened to the external structure or the support and/or protection device by a rope. For example, the at least one fastening element is a fastening loop and the rope is fed through the fastening loop or fastening loops to attach the fastening element to the external structure or the further fastening device.

Since the fastening elements are already attached to and in particular integrated into the support and/or protection device, installing the support and/or protection device is greatly facilitated since no separate fastening means have to be provided on the support and/or protection device itself. Only further cords and/or cable may need to be provided to attach the support and/or protection device to the external structure, such as one or more poles. Advantageously, the support and/or protection device is configured such that it can be directly attached to the external structure.

The support and/or protection device is in particular area-measured and flexible so that it may be installed such that is covers an object and/or area to be protected or supported.

When the support and/or protection device is used to support an object, the support and/or protection device is configured with supporting properties, e.g. the edge and the support and/or protection section provide sufficient support force to keep an object in place.

The is in particular used in the agricultural field, for example to be installed at or attached to plants or trees. There, it may function to support parts of the plant or tree, for example branches, from bending or protruding from the plant or tree. For example, the support and/or protection device is used to be attached to kiwi plants, in particular in the upper region of the kiwi plant. The kiwi plant comprises vine-like branches which can advantageously be secured to the plant by means of the support and/or protection device which may be installed surrounding the kiwi plant.

Furthermore, the support and/or protection device may have protecting properties to protect an area, e.g. from falling objects. For example, the support and/or protection device may be a snow fence.

The at least one fastening element may be arranged offset to the edge so that an overlapping attachment of two textile support and/or protection devices is possible. Due to the offset arrangement of the fastening element, the edge of each textile support and/or protection device has an edge region which is not used for fastening the textile support and/or protection device and which is configured for overlapping with the edge region of another textile support and/or protection device. The edge region configured for overlapping preferably extends along an entire circumference of the textile support and/or protection device or along only one or more sections along the circumference, for example at two opposite edge sections or only at one edge section or side of an essentially rectangular or square support and/or protection device. In case that a plurality of fastening elements are provided, the fastening elements are preferably offset to the edge by the same distance. Thus, the fastening elements are arranged along a line offset to the edge.

The shape of the support and/or protection device is not limited to the rectangular or square shape and may have any other shape depending on the application. Thus, also round or polygonal shapes are possible, for example.

In particular, the support and/or protection device has a rectangular shape, wherein a longitudinal extension is significantly greater than a transversal extension. For example, a longitudinal side length of the support and/or protection device is at least two, three, four, five, six, seven, eight, nine, ten or more times the transversal, shorter side length of the support and/or protection device. In particular, the support and/or protection device may be configured as a yard good wherein the transversal, shorter side length is usually predetermined and the longitudinal side length may be chosen depending on the application.

Preferably, the support and/or protection section, the fastening element and/or the edge is or are configured as a textile element, wherein in particular the fastening element and/or the edge are configured as a textile cord and/or wherein the support and/or protection device is entirely made of textile material. Thus, the, in particular entire, support and/or protection device is configured flexible, has a light weight and may easily be produced in different shapes depending on the application.

In particular, the support and/or protection section, the fastening element and/or the edge may be made from, in particular, textile cord. Preferably, the support and/or protection section, the fastening element and/or the edge may be made of cord having different shapes, sizes and/or materials. For example, the edge and/or the fastening element may be made of the cord having a larger diameter and/or a more durable material to ensure reliable fastening of the support and/or protection device and avoid wear of the edge. The support and/or protection section may be made of cord having a smaller diameter and/or less durable material than the cord of the edge and/or the fastening device since the weight is more evenly distributed over the area of the support and/or protection section.

Preferably, the support and/or protection device, in particular entirely or in part, consists of polyester and/or compostable material or may comprise polyester and/or compostable material. In particular, the entire support and/or protection device, in particular the support and/or protection section, the edge and/or the at least one fastening element, consists of a compostable material. In this way, the support and/or protection device can advantageously be left at the installation site after use, for example when used in agriculture. Furthermore, disposal of the support and/or protection device is facilitated when it only consists of compostable materials or a compostable material.

Preferably, the cord of the support and/or protection section, the fastening element and/or the edge may be textile or be made of other materials. Also a combination is possible wherein one or two of the support and/or protection section, the fastening element and/or the edge are made of textile cord and the remaining parts are made of other materials, such as metal or plastic. Each of the support and/or protection section, the fastening element and/or the edge may also be made of a combination of different materials, for example a textile material and metal or plastic.

Preferably, the fastening element is configured integral with the edge or with the support and/or protection section. In particular, the edge and/or the support and/or protection section are made from a textile material and the fastening element is integrated into the edge and/or support and/or protection section during the weaving or knitting process. The fastening element is in particular weaved or knitted into the edge and/or the support and/or protection section. In other words, the fastening element itself is produced during the weaving or knitting process of the edge and/or the support and/or protection section. Here, no separate fastening element has to be produced beforehand for integration during or after the knitting or weaving process. Thus, the production of the support and/or protection device is particularly easy. Thus, the fastening element is preferably also made from the same textile material as the edge and/or the support and/or protection section.

The edge or the edge sections are preferably made by braiding, knitting, or weaving. During the braiding, knitting, or weaving process, the at least one fastening element is preferably formed in the edge. For example the fastening element can be formed by pulling parts of the string from the which the edge is braided to form a fastening loop.

Alternatively, the fastening element may be a separate element that is integrated into the edge and/or support and/or protection section during the weaving and or knitting process or is attached to the support and/or protection device after producing the edge and/or the support and/or protection section.

Preferably, a plurality of fastening elements is arranged at the edge and/or offset from the edge. The fastening elements of the plurality of fastening elements are preferably configured identically and are in particular configured as the aforementioned fastening element.

Preferably, the plurality of fastening elements is arranged evenly distributed along the edge or the offset section of the support and/or protection section. The fastening elements are in particular equally spaced apart from one another. The fastening elements are preferably arranged along a (imaginary) line extending essentially parallel to the edge or along the extension of the edge.

Preferably, the fastening elements are arranged along the entire edge or exclusively at one or more sections of the edge. If more sections of the edge are provided that have the fastening elements, the sections are preferably evenly spaced apart. The one or more sections can preferably cover at least a third, a half or two thirds of the entire edge.

Preferably, the support and/or protection section comprises a net. Preferably, the entire area of the support and/or protection section comprises a net or only a part of the support and/or protection section comprises a net. The net may have stitches that may be sizes depending on the application. The net may be weaved or knitted. The net may furthermore be textile.

The support and/or protection section may comprise several layers, which are in particular configured differently. For example, the support and/or protection section may comprise one layer of net and a further layer of a different design. Thus, the functionality of supporting and protecting may be combined if, for example, a first net layer is provided for protection purposes and a second layer is provided for supporting purposes. A possible configuration of the second layer is described in the following.

Preferably, the support and/or protection section comprises, in particular textile, cord sections which are extending, in particular exclusively, between fastening areas at opposite edge sections. The cord section may be configured integral with the edge or may be separate and be attached to the edge as will be described later.

The cord section may, for example, form a single layer of the support and/or protection section or may form the aforementioned second layer.

Preferably, the cord sections extend generally in a direction perpendicular to the edge. It is also possible for the cord section to extend in an angle greater or smaller than 90° in case that the cord sections extend obliquely over the support and/or protection section.

Preferably, the cord sections form a uniform pattern in the support and/or protection section.

The cord sections may extend parallel to each other or two neighboring cord sections may be arranged at an angle to each other. Thus, the cord section may be comprised of, in particular, exclusively vertical cord sections in a front view of the support and/or protection device installed on an object. Alternatively, the cord section may form a zig-zag-shape. The zig-zag-shape may, for example, be achieved by arranging the fastening elements that are facing each other from the opposite edge sections staggered in the direction along the edge such that they are not directly opposite of one another.

Preferably, a distance between two neighboring parallel cord sections or a distance between neighboring cord sections at their fastening point at the edge is preferably between 1 cm and 80cm, more preferably between 20 cm and 60 cm, particularly preferably between 45 cm and 55 cm. For example, the distance may be 50 cm.

Preferably, the fastening areas each comprise at least one fastening element. Alternatively, two or more fastening elements may be provided in each fastening area.

The one or more fastening elements may advantageously be used to fasten the support and/or protection device to the external support structure and also to attach the support and/or protection section to the edge. In particular, the net and/or the cord sections may be attached to the edge by means of the fastening element or elements.

A fastening area is in particular a part or section of the edge where at least one end of one of the cord sections is attached. Furthermore, ends of two neighboring cord sections may meet at one fastening area and may be attached to one or more, for example two, fastening elements in the fastening area.

Preferably, the cord is attached to at least two, in particular spaced-apart, fastening elements at each fastening area. Thus, the fastening of the cord may be more reliable. Furthermore, the space between the two fastening elements may correspond to the desired spacing between the cord sections. Thus, the cord is attached to each of the edge sections by two fastening elements at each fastening point.

Preferably, the cord sections are formed by one continuous cord or by multiple separate cords which are running between the fastening points at the opposite edge sections, respectively. Thus, each cord section may be a separate piece of cord the two free ends of which are attached in one fastening area of each edge section. Alternatively, a single cord is provided that extends over the support and/or protection section and is attached to the edge section section-wise. Thus, the single cord runs back and forth between the opposite edge sections to form the support and/or protection section.

Also a combination of the two aforementioned embodiments is possible, wherein two or more single cords are provided, wherein each single cord forms a section of the entire support and/or protection section. In each section a single cord runs back and forth between the opposite edge sections. The sections which are forming by the single cords together form the entire support and/or protection section. This is in particular advantageous for large nets, where arranging a single cord over the large area of the support and/or protection section would be technically difficult. The one or more single cords may be attached with their free ends to the edge sections or the single cords may be attached to each other at their ends to form one long continuous multi-piece cord.

Preferably, the fastening elements are fastening loops, wherein the cord or the cords is or are fed through the fastening loops for attaching the cord to the edge sections. Thus, the cord runs back and forth between the edge sections and one or more fastening loops in one fastening area of one of the edge sections forms the turning point of the cord before returning to the other one of the edge sections where it is fed through the next one or more fastening loops.

Preferably, the cord or the cords are exclusively attached to the edge and in the support and/or protection device by means of the fastening elements.

Preferably, the cord is fed through two, in particular spaced-apart, fastening loops of the same edge section. The two fastening loops belong in particular to the same fastening area. The space between two fastening loops corresponds to the desired spacing between two neighboring cord sections as already described above.

Preferably, the fastening elements are exclusively arranged at two opposite edge sections. Preferably, the support and/or protection device is essentially rectangular or square-shaped with two opposite, in particular longitudinal, edge sections which comprise the fastening elements. That is, the two other, in particular shorter, sides of the support and/or protection device in particular do not comprise the fastening elements. Furthermore, the sides of the support and/or protection device that do not have the fastening elements are furthermore preferably free of the edge material, e.g. the cord, that forms the two opposite edge sections with the fastening elements. That is, these edge at these sides formed by the outermost cord sections.

Alternatively, the fastening elements may be arranged around the entire circumference of the support and/or protection device.

Thus, in a preferred embodiment, the support and/or protection device consists of only the two opposite and separate edge sections and the cord that is arranged between the two edge sections.

The object of the invention is also achieved by a system comprising one or more plants or trees, in particular kiwi plants, and one or more textile support and/or protection devices as described above. The textile support and/or protection device or devices may be formed as any one of the aforementioned embodiments. In the system, the one or more textile support and/or protection devices function to support parts, in particular branches, of the one or more plants or trees.

The object of the invention is furthermore achieved by a method for producing a textile support and/or protection device with the aforementioned features, comprising the following steps:
- Providing at least two opposite edge sections, wherein each opposite edge section comprises at least two fastening elements, wherein the fastening elements are configured as fastening loops,
- Feeding a, in particular textile, cord through a first fastening loop at a first of the two edge section,
- subsequently feeding the cord through a first fastening loop at the second one of the two edge sections,
- subsequently feeding the cord through a second fastening loop at the first edge section, and
- subsequently feeding the cord through a second fastening loop at the second edge section.

The two opposite edge sections are preferably produced beforehand. The two edge sections are preferably two separate cord sections, which are preferably braided. The at last one fastening element is preferably produced during the braiding process of the edge section.

When only one fastening loop is provided in each fastening area, feeding the cord through the subsequent loops forms a cord in a zig-zag-shape. Alternatively, each fastening area may comprise two fastening loops to feed the cord though such that the cord forms an essentially meander shape.

In addition, the object of the invention is solved by a method for converting the textile support and/or protection device produced by the aforementioned method into a transport configuration, wherein the two free ends of the cord are pulled in opposite directions until the cord is stretched out essentially straight and two edge sections are arranged essentially adjacent to one another with the cord between the two edge sections.

The support and/or protection device can thus advantageously be brought in a compact shape. In particular, the support and/or protection device has an elongate shape in the transport configuration and may therefore be rolled up for transport.

Also, from the transport configuration, the support and/or protection device can advantageously be installed in or at the object or in the area to be supported and/or protected. The support and/or protection device can be laid out along the object or area while still being in the transport configuration which facilitates handling due to the compact shape. Then the support and/or protection device can be stretched out again by pulling the edge sections apart so that the cord spans out between the edge sections. By this, also the depth of the support and/or protection device perpendicular to the edge sections can advantageously be varied and chosen depending on the particular situation.

After use of the support and/or protection device, the method steps described above can be repeated again to bring the support and/or protection device back into the transport configuration with the support and/or protection device still installed or with the support and/or protection device already removed from the object or area to also facilitate de-installation of the support and/or protection device.

The invention is explained in more detail below with reference to exemplary embodiments. It shows in
- Fig. 1: a support and/or protection device according to a first embodiment,
- Fig. 2: a support and/or protection device according to a second embodiment,
- Fig. 3: a detail view of the support and/or protection device according to the second embodiment,
- Fig. 4: a support and/or protection device according to a third embodiment, und
- Fig. 5: the principle of converting a support and/or protection device into a transport configuration.

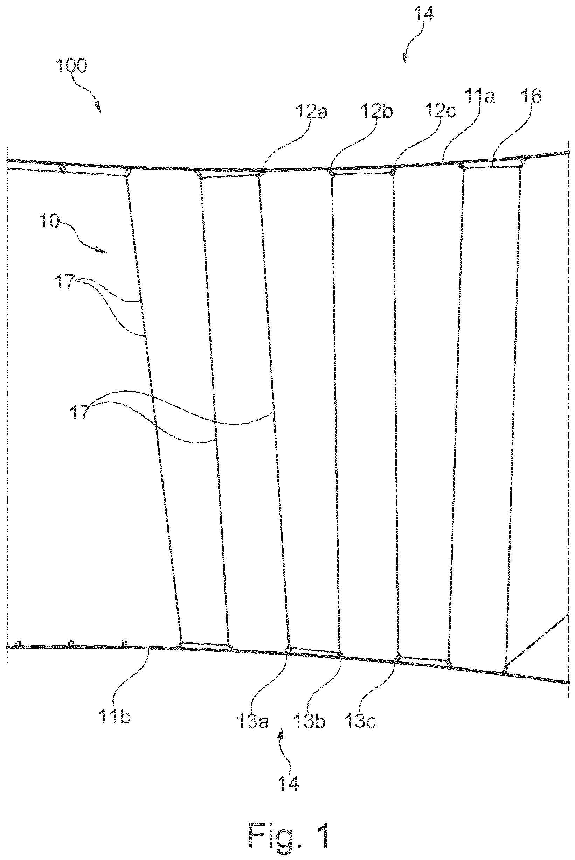

Figure 1 shows a support and/or protection device 100 according to a first embodiment. The support and/or protection device 100 comprises two edge sections 11a, 11b which are arranged opposite to one another. The edge sections 11a, 11b are configured as textile cords and comprise each a plurality of fastening elements 12a, 12b, 12c, 13a, 13b, 13c configured as fastening loops. The fastening loops are configured integral with the cord of the edge section 11a, 11b and have been incorporated into the cord during braiding of the cord. The fastening loops are arranged equally spaced apart from each other.

Two neighboring fastening elements12a, 12b, 12c, 13a, 13b, 13c form one fastening area 14 for attaching a cord 16 between the edge sections 11a , 11b. The cord 16 is configured as a single continuous cord that is fed through the fastening loops in the fastening areas 14 in a back and forth fashion to form a support and/or protection section 10 between the edge portions 11a, 11b.

The support and/or protection portion 10 is formed from a plurality of parallel cord sections 17 extending between the edge sections 11a, 11b. The parallel cord sections 17 are formed by the cord which is fed through a first fastening element 12a at the first edge section 11a, then through a first fastening element 13a at the second edge section 11b to be then fed through a second fastening element 13b of the same edge section 11b. Subsequently, the cord 16 is fed through a second fastening element 12b at the first edge section 11a to then be fed through a third fastening element 12c of the first edge section 11a. This pattern of feeding the cord 16 through the fastening elements is repeated along the entire extension of the edge sections 11a, 11b.

The support and/or protection device 100 shown in figure 1 is rectangular or square-shaped wherein the edge sections 11a, 11b form longitudinal edges. The transverse edges are formed by the two outermost cord sections 17.

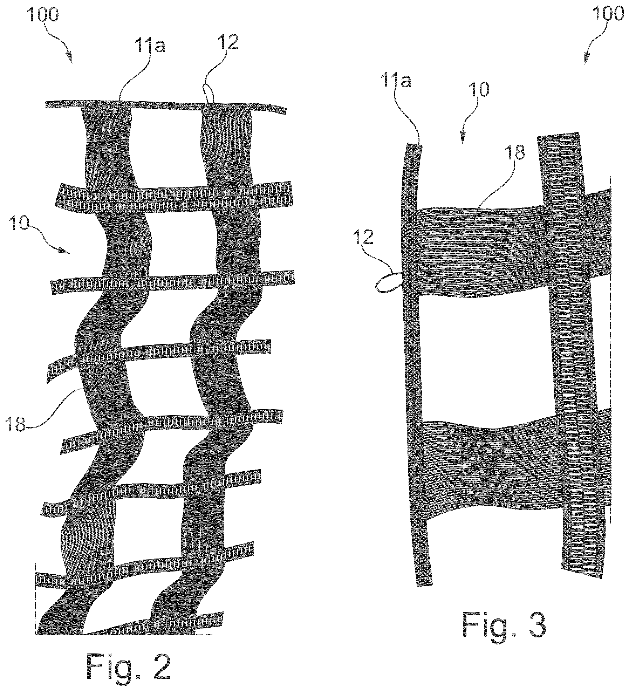

Figure 2 shows a second embodiment of the support and/or protection device 100. While the edge sections 11a, 11b are configured essentially identical to the edge sections 11a, 11b of the first embodiment, the support and/or protection section 10 is configured differently. In particular, the support and/or protection section 10 is formed by a net 18 that extends between the two edge sections 11a, 11b. The support and/or protection section 18 and the edge sections 11a, 11b are both knitted and/or braided and are in particular during the same knitting and/or braiding process.

Figure 3 shows a detailed view of the first edge sections 11a. It can be seen that the fastening element 12, which is configured as a fastening loop, is integrated into the braid of the edge section 11a. The fastening loop in particular is formed by one of the strings of the braid.

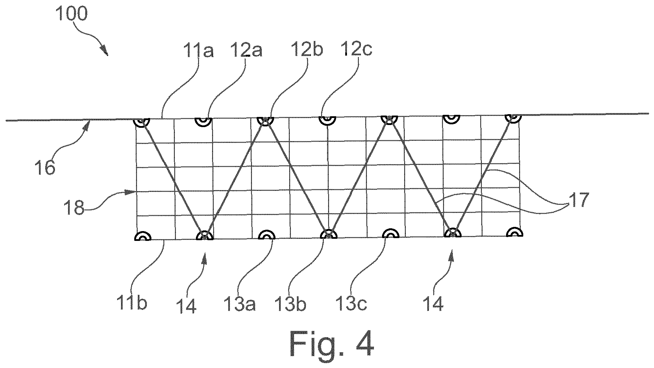

Figure 4 shows a support and/or protection device 100 according to a third embodiment. The third embodiment is similar to the first embodiment shown in figure 1 wherein in contrast to the first embodiment the cord 16 if only fed through every other fastening element at one edge section 11a, 11b. Consequently, for three neighboring fastening elements 12a, 12b, 11c at one edge section 11a, 11b, only the fastening elements 12a, 12c are used to feed the cord 16 through. Thus, the fastening areas 14 are only formed by a single fastening element 12a, 12c. The same applies to the second edge section 11b. The fastening elements that do not have the cord 16 fed through could alternatively be omitted. This way of feeding the cord 16 through the fastening loops results in a zig-zag-shaped arrangement of the cord sections 17.

Furthermore, the support and/or protection device 100 according to the second embodiment comprises a support and/or protection section 10 with two layers. A first layer is a net 18 and the second layer is formed by the cord section 17. Thus, the support and/or protection device 100 may combine a support function that is provided by the cord sections 16 and a protection function which is provided by the net 16.

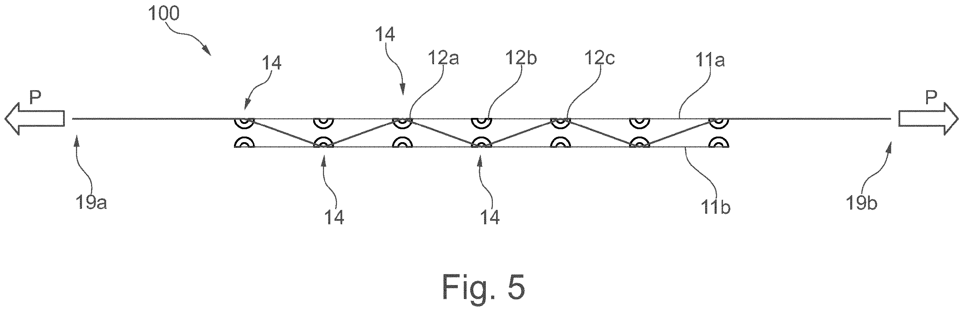

Figure 5 shows the principle of converting a support and/or protection device 100 into a transport configuration. While figure 5 shows this for a support and/or protection device 100 of the third embodiment, the same principle can be applied to the first and second or any other embodiment of the support and/or protection device 100.

To bring the support and/or protection device 100 into a compact shape, two free ends 19a, 19b of the cord 16 are pulled in opposite directions indicated by the arrows P. This results in the edge sections 11a, 11b being pulled together towards each other. In other words, the support and/or protection section 10 is contracted until the cord 16 is merely an essentially straight cord arranged between the edge sections 11a, 11b.

In this configuration, the support and/or protection device 100 may easily be transported or attached to an object during installation.

### List of reference signs

- 100: support and/or protection device

- 10: support and/or protection section
- 11a: first edge section
- 11b: second edge section
- 12, 12a -c: fastening elements of first edge section
- 13, 13a -c: fastening elements of second edge section
- 14: fastening area
- 16: cord
- 17: cord sections
- 18: net
- 19a, 19b: free ends of cord

- P: direction of pull

## Claims

1. Textile support and/or protection device (100) for supporting and/or protecting an object and/or an area and for indoor and/or outdoor application, in particular in agriculture, environmental engineering, sports, leisure, building industry, construction, dust protection, industry application, environmental protection, military, waste management application and/or road work, comprising an area-measured support and/or protection section (10), wherein at least one fastening element (12a, 12b, 12c, 13a, 13b, 13c), in particular a fastening loop, is arranged at an edge (11a, 11b) of the support and/or protection device (100) or offset from the edge (11a, 11b) towards a center of the support and/or protection section (10).

2. Textile support and/or protection device (100) according to claim 1, wherein the support and/or protection section (10), the fastening element (12a, 12b, 12c, 13a, 13b, 13c) and/or the edge (11a, 11b) is configured as a textile element, wherein in particular the fastening element (12a, 12b, 12c, 13a, 13b, 13c) and/or the edge (11a, 11b) are configured as a textile cord and/or wherein the support and/or protection device (100) is entirely made of textile material.

3. Textile support and/or protection device (100) according to one of the preceding claims, wherein the fastening element (12a, 12b, 12c, 13a, 13b, 13c) is configured integral with the edge (11a, 11b) or with the support and/or protection section (10).

4. Textile support and/or protection device (100) according to one of the preceding claims, wherein a plurality of fastening elements (12a, 12b, 12c, 13a, 13b, 13c) are arranged at the edge (11a, 11b) and/or offset from the edge (11a, 11b).

5. Textile support and/or protection device (100) according to claim 4, wherein the fastening elements (12a, 12b, 12c, 13a, 13b, 13c) are arranged along the entire edge (11a, 11b) or exclusively at one or more sections of the edge (11a, 11b).

6. Textile support and/or protection device (100) according to one of the preceding claims, wherein the support and/or protection section (10) comprises a net (18).

7. Textile support and/or protection device (100) according to one of the preceding claims, wherein the support and/or protection section (10) comprises, in particular textile, cord sections (17) which are extending, in particular exclusively, between fastening areas (14) at opposite edge sections (11a, 11b).

8. Textile support and/or protection device (100) according to claim 7, wherein the fastening areas (14) each comprise at least one fastening element (12a, 12b, 12c, 13a, 13b, 13c).

9. Textile support and/or protection device (100) according to one of claims 7 or 8, wherein the cord (16) is attached to at least two, in particular spaced-apart, fastening elements (12a, 12b, 12c, 13a, 13b, 13c) at each fastening area (14).

10. Textile support and/or protection device (100) according to one of claims 7 to 9, wherein the cord sections (17) are formed by one continuous cord (16) or by multiple separate cords which are running between the fastening points (14) at the opposite edge sections (11a, 11b), respectively.

11. Textile support and/or protection device (100) according to claim 9, wherein the fastening elements (12a, 12b, 12c, 13a, 13b, 13c) are fastening loops and wherein the cord (16) or the cords (16) is or are fed through the fastening loops for attaching the cord (16) to the edge sections (11a, 11b).

12. Textile support and/or protection device (100) according to claim 11, wherein the cord (16) is fed through two, in particular spaced-apart, fastening loops of the same edge section (11a, 11b).

13. Textile support and/or protection device (100) according to one of the preceding claims, wherein the fastening elements (12a, 12b, 12c, 13a, 13b, 13c) are exclusively arranged at two opposite edge sections (11a, 11b) and/or wherein the support and/or protection device (10) is essentially square-shaped with two opposite, in particular longitudinal, edge sections (11a, 11b) which comprise the fastening elements (12a, 12b, 12c, 13a, 13b, 13c).

14. Method for producing a textile support and/or protection device (100) according to one of the preceding claims, comprising the following steps:
- Providing at least two opposite edge sections (11a, 11b), wherein each opposite edge section (11a, 11b) comprises at least two fastening elements (12a, 12b, 12c, 13a, 13b, 13c), wherein the fastening elements (12a, 12b, 12c, 13a, 13b, 13c) are configured as fastening loops,
- Feeding a, in particular textile, cord (16) through a first fastening loop at a first of the two edge section (11a),
- subsequently feeding the cord (16) through a first fastening loop at the second one of the two edge sections (11b),
- subsequently feeding the cord (16) through a second fastening loop at the first edge section (11a), and
- subsequently feeding the cord (16) through a second fastening loop at the second edge section (11b).

15. Method for converting the textile support and/or protection device (100) produced by the method of claim 14 into a transport configuration, wherein the two free ends (19a, 19b) of the cord (16) are pulled in opposite directions (P) until the cord (16) is stretched out essentially straight and two edge sections (11a, 1b) are arranged essentially adjacent to one another with the cord (16) between the two edge sections (11a, 11b).
